# EUROPEAN PATENT APPLICATION

(11) **EP 3 913 046 A1**
(43) Date of publication of application: **24.11.2021**
(21) Application number: 20741728.8
(22) Date of filing: 17.01.2020
(51) Int. Cl.: C12N 5/07, C12N 1/04

(54) **CELL CRYOPRESERVATION LIQUID**

(30) Priority: 17.01.2019 JP 2019006350
(71) Applicant: Nagase & Co., Ltd., Osaka-shi Osaka 550-8668 (JP)
(72) Inventor: KAWANO Kenji, Kobe-shi, Hyogo 651-2241 (JP); OKA Shigenori, Kobe-shi, Hyogo 651-2241 (JP)
(74) Representative: Winter, Brandl - Partnerschaft mbB
(86) International application number: PCT/JP2020/001432
(87) International publication number: WO 2020/149394

(57) **Abstract**

An object of the present invention is to provide a cell cryopreservation solution that is excellent in cell preservation effect and forms less bubbles. The present invention is a cell cryopreservation solution, comprising: a cell membrane permeable polyhydric alcohol (a) in a concentration of 1.0 to 25.0 v/v%, a saccharide (b) in a concentration of 100 to 1000 mM, and at least one (c) selected from the group consisting of Ficoll and polyethylene glycol in a total concentration of 0.5 to 10.0 w/v%.

## Description

### TECHNICAL FIELD

The present invention relates to a cell cryopreservation solution.

### BACKGROUND ART

When cultured cells are repeatedly subcultured, cell degeneration, genetic variation and bacterial contamination can be caused therein, and hence, in order to stably utilize cells for a long period of time, cultured cells are cryopreserved. For example, cells are suspended in a preservation solution obtained by adding dimethyl sulfoxide (DMSO), glycerin or the like to a medium, a serum or the like, the resultant is filled in a cryovial, the temperature is lowered in a controlled manner with a rate-controlled freezer or the like to freeze the cells, and the resultant cells are preserved in liquid nitrogen.

As the preservation solution to be thus used for freezing cells, various preservation solutions have been developed in accordance with applications. With respect to dimethyl sulfoxide (DMSO) which is one of ingredients used in the preservation solution, there are reports on a case of using it for inducing differentiation of cultured cells, a possibility of changing differentiation phenotype of cells when used in cryopreservation, and the like. Therefore, a preservation solution not using dimethyl sulfoxide (DMSO) has been developed (Patent Document 1).

Since conventional cell cryopreservation solutions have been developed from the viewpoints of influence on preserved cells and level of preservation effect, many of the conventional cryopreservation solutions are still insufficient in handleability. For example, in using a cell cryopreservation solution which is easy to bubble, there is a concern that bubbles may pop during a suspending operation to damage cells, or to cause contamination. Accordingly, when such a cell cryopreservation solution is used, an extremely cautious operation is required, which leads to a problem of lowering the handleability.

### PRIOR ART DOCUMENT

### Patent Document

Patent Document 1: JP 2010-273549 A

### SUMMARY OF INVENTION

### Technical Problem

Accordingly, in consideration of the above-described circumstances, an object of the present invention is to provide a cell cryopreservation solution that is excellent in cell preservation effect and forms less bubbles.

Another object of the present invention is to provide a cell cryopreservation solution that does not contain dimethyl sulfoxide (DMSO) as an essential ingredient.

### Solution to Problem

The present inventors made diligent studies for achieving the objects, and as a result, found that a cell cryopreservation solution that is excellent in cell preservation effect and forms less bubbles can be obtained by using a cell membrane permeable polyhydric alcohol (a) in a concentration of 1.0 to 25.0 v/v%, a saccharide (b) in a concentration of 100 to 1000 mM, and at least one (c) selected from the group consisting of Ficoll and polyethylene glycol in a total concentration of 0.5 to 10.0 w/v% as principal ingredients for preparation of a cell cryopreservation solution, and thus, the present invention was accomplished.

Specifically, the present invention relates to the following.
(1) A cell cryopreservation solution, comprising: a cell membrane permeable polyhydric alcohol (a) in a concentration of 1.0 to 25.0 v/v%, a saccharide (b) in a concentration of 100 to 1000 mM, and at least one (c) selected from the group consisting of Ficoll and polyethylene glycol in a total concentration of 0.5 to 10.0 w/v%.
(2) The cell cryopreservation solution according to (1) described above, wherein a base solution is a buffer or a basal medium.
(3) The cell cryopreservation solution according to (1) or (2) described above, wherein the cell membrane permeable polyhydric alcohol (a) is at least one selected from the group consisting of ethylene glycol and propylene glycol.
(4) The cell cryopreservation solution according to (3) described above, containing ethylene glycol alone as the cell membrane permeable polyhydric alcohol (a).
(5) The cell cryopreservation solution according to any one of (1) to (4) described above, wherein the saccharide (b) is an oligosaccharide.
(6) The cell cryopreservation solution according to (5) described above, wherein the saccharide (b) is at least one selected from the group consisting of trehalose, sucrose, lactose, and maltotriose.
(7) The cell cryopreservation solution according to any one of (1) to (6) described above, further comprising L-ascorbic acid 2-glucoside.
   The present invention also relates to the following.
(8) A slow freezing method for cells, comprising using the cell cryopreservation solution according to any one of (1) to (7) described above.

### Advantageous Effects of Invention

According to the present invention, a cell cryopreservation solution that is excellent in cell preservation effect and forms less bubbles can be provided. Besides, the cell cryopreservation solution does not use dimethyl sulfoxide (DMSO) as an essential ingredient, and hence can be safely used because the risk of induction of unexpected cell differentiation is low.

### BRIEF DESCRIPTION OF DRAWINGS

[Fig. 1] Fig. 1 is a graph illustrating preservation effect of each cell cryopreservation solution on normal human dermal fibroblasts.
[Fig. 2] Fig. 2 is a graph illustrating preservation effect of each cell cryopreservation solution on normal human dermal fibroblasts.
[Fig. 3] Fig. 3 is a graph illustrating preservation effect of each cell cryopreservation solution on normal human dermal fibroblasts.
[Fig. 4] Fig. 4 is a graph illustrating preservation effect of each cell cryopreservation solution on NIH3T3 cells (mouse fibroblasts).
[Fig. 5] Fig. 5 is a graph illustrating preservation effect of each cell cryopreservation solution on normal human dermal fibroblasts or human bone marrow-derived mesenchymal stem cells.
[Fig. 6] Fig. 6 illustrates representative photographs of bubble-remaining states obtained in a bubble breaking test of each cell cryopreservation solution.
[Fig. 7] Fig. 7 is a graph illustrating preservation effect of each cell cryopreservation solution on normal human dermal fibroblasts.
[Fig. 8] Fig. 8 is a graph illustrating preservation effect of each cell cryopreservation solution on normal human dermal fibroblasts.
[Fig. 9] Fig. 9 is a graph illustrating preservation effect of each cell cryopreservation solution on two types of human bone marrow-derived mesenchymal stem cells or human adipose tissue-derived stem cells.
[Fig. 10] Fig. 10 is a graph illustrating preservation effect of each cell cryopreservation solution on normal human dermal fibroblasts.
[Fig. 11] Fig. 11 is a graph illustrating preservation effect of each cell cryopreservation solution on normal human dermal fibroblasts or bone marrow-derived mesenchymal stem cells.
[Fig. 12] Fig. 12 is a graph illustrating preservation effect of each cell cryopreservation solution on normal human dermal fibroblasts.
[Fig. 13] Fig. 13 is a graph illustrating preservation effect of each cell cryopreservation solution on normal human dermal fibroblasts.

### DESCRIPTION OF EMBODIMENTS

The present invention will hereinafter be described in detail. It is noted that terms used herein should be interpreted as having meanings usually used in this technical field unless otherwise stated.

### [Cell Cryopreservation Solution]

A cell cryopreservation solution of the present invention contains: a cell membrane permeable polyhydric alcohol (a) in a concentration of 1.0 to 25.0 v/v%, a saccharide (b) in a concentration of 100 to 1000 mM, and at least one (c) selected from the group consisting of Ficoll and polyethylene glycol in a total concentration of 0.5 to 10.0 w/v%. The cell cryopreservation solution of the present invention having such composition is excellent in cell preservation effect and forms less bubbles.

### <Cell Membrane Permeable Polyhydric Alcohol (a)>

In the present invention, the cell membrane permeable polyhydric alcohol (a) is a polyhydric alcohol permeable through a cell membrane, and is basically a polyhydric alcohol having a low molecular weight. The cell membrane permeable polyhydric alcohol used in the present invention is not especially limited, and ethylene glycol, propylene glycol, 1,3-propanediol, butylene glycol, isoprene glycol, dipropylene glycol, and glycerin are preferred, ethylene glycol and propylene glycol are more preferred, and propylene glycol is particularly preferred. These cell membrane permeable polyhydric alcohols can be used alone or in combination of two or more.

In the cell cryopreservation solution of the present invention, the cell membrane permeable polyhydric alcohols can be used alone or in combination of two or more, and can preferably be used alone. Therefore, the cell cryopreservation solution of the present invention preferably contains, as the cell membrane permeable polyhydric alcohol, propylene glycol alone or ethylene glycol alone.

The content of the cell membrane permeable polyhydric alcohol (a) in the cell cryopreservation solution of the present invention is 1.0 to 25.0 v/v%. The content of the cell membrane permeable polyhydric alcohol (a) is more preferably 2.0 to 20.0 v/v%, further preferably 2.5 to 17.5 v/v%, still more preferably 5.0 to 15.0 v/v%, and particularly preferably 8.0 to 12.0 v/v%.

### <Saccharide (b)>

In the present invention, the saccharide (b) means a monosaccharide, an oligosaccharide and derivatives thereof. Here, an oligosaccharide refers to an oligomer in which two to ten molecules of a monosaccharide are bonded, and specific examples include a disaccharide, a trisaccharide, a tetrasaccharide, a pentasaccharide, and a heptasaccharide. Examples of the monosaccharide include glucose, galactose, fructose, ribose, and mannose, and examples of the oligosaccharide include disaccharides such as trehalose, sucrose, maltose, isomaltose, cellobiose, and lactose, trisaccharides such as maltotriose, maltotetraose, maltopentaose, and maltoheptaose. The saccharide used in the present invention is preferably an oligosaccharide, and more preferably a disaccharide and a trisaccharide, and among these, trehalose, sucrose, lactose, and maltotriose are preferred, trehalose, sucrose, and maltotriose are more preferred, trehalose and sucrose are further preferred, and trehalose is particularly preferred. These saccharides can be used alone or in combination of two or more.

In the cell cryopreservation solution of the present invention, the saccharides can be used alone or in combination of two or more, and can preferably be used. Therefore, the cell cryopreservation solution of the present invention preferably contains, as the saccharide, only one selected from the group consisting of trehalose, sucrose, lactose, and maltotriose, preferably contains only one selected from the group consisting of trehalose, sucrose, and maltotriose, more preferably contains only one selected from the group consisting of trehalose and sucrose, and particularly preferably contains trehalose alone.

The content of the saccharide (b) in the cell cryopreservation solution of the present invention is 100 to 1000 mM. The content of the saccharide (b) is more preferably 100 to 600 mM, further preferably 100 to 400 mM, still further preferably 100 to 300 mM, and particularly preferably 200 to 300 mM.

### <Ficoll and/or Polyethylene Glycol (c)>

The cell cryopreservation solution of the present invention contains at least one (c) selected from the group consisting of Ficoll and polyethylene glycol. Ficoll and polyethylene glycol can be used alone or in combination. In the present invention, Ficoll and/or polyethylene glycol constitute the cell cryopreservation solution of the present invention in combination with the cell membrane permeable polyhydric alcohol (a) and the saccharide (b), and such a cell cryopreservation solution is a cell cryopreservation solution that is excellent in cell preservation effect and forms less bubbles.

The cell cryopreservation solution of the present invention contains at least one (c) selected from the group consisting of Ficoll and polyethylene glycol, and in order to more surely obtain a cell cryopreservation solution that is excellent in cell preservation effect and forms less bubbles, the cell cryopreservation solution is preferably free of a cell membrane impermeable polymer except for these. Here, a cell membrane impermeable polymer refers to a polymer not permeable through a cell membrane, and encompasses, for example, albumin (such as serum albumin), polyvinyl alcohol (PVA) and the like, but does not encompass the saccharide (b) of the present invention, L-ascorbic acid 2-glucoside and the like. Therefore, the cell cryopreservation solution of the present invention is more preferably free of albumin (such as serum albumin), further preferably free of albumin (such as serum albumin) and polyvinyl alcohol (PVA), and particularly preferably free of a cell membrane impermeable polymer except for at least one (c) selected from the group consisting of Ficoll and polyethylene glycol (contains Ficoll and/or polyethylene glycol alone as a cell membrane impermeable polymer). In particular, the cell cryopreservation solution of the present invention preferably contains, as the cell membrane impermeable polymer, only polyethylene glycol.

Ficoll (polysucrose) is a neutral and hydrophilic synthetic polysaccharide rich in side chains produced from sucrose (Ficoll being a registered trademark of GE Healthcare). Ficoll used in the present invention has an average molecular weight of preferably 10,000 to 1,000,000, and particularly preferably 300,000 to 550,000. Here, examples of a specific product of Ficoll having an average molecular weight of 10,000 to 1,000,000 include Ficoll PM70 (average molecular weight: 60,000 to 80,000) and Ficoll PM400 (average molecular weight: 300,000 to 500,000) available from GE Healthcare, and an example of a specific product of Ficoll having an average molecular weight of 300,000 to 550,000 includes Ficoll PM400 available from GE Healthcare. Although Ficoll is a registered trademark of GE Healthcare, Ficoll used in the present invention encompasses polymers having the same constituent molecules, and an example of a specific product includes Polysucrose 400 (average molecular weight: 350,000 to 550,000) available from Fujifilm Wako Pure Chemical Corporation.

Polyethylene glycol is a polymer compound having a structure obtained by polymerizing ethylene glycol. Polyethylene glycol used in the present invention has an average molecular weight of preferably 200 to 50,000, and particularly preferably 6,000 to 30,000. Here, examples of a specific product of polyethylene glycol having an average molecular weight of 200 to 50,000 include polyethylene glycol #200, #300, #400, #600, #1,000, #1,500, #1,540, #2,000, #4,000, #6,000, and #20,000 available from Nacalai Tesque, Inc., and examples of a specific product of polyethylene glycol having an average molecular weight of 6,000 to 30,000 include #6,000 and #20,000 available from Nacalai Tesque, Inc.

The content of Ficoll and/or polyethylene glycol (c) in the cell cryopreservation solution of the present invention is 0.5 to 10.0 w/v% in total. A preferred lower limit of the content is 0.5 w/v% in total, 1.0 w/v% in total, 1.5 w/v% in total, 2.0 w/v% in total, 2.5 w/v% in total, 4.0 w/v% in total, or 4.5 w/v% in total, and a preferred upper limit of the content is 10.0 w/v% in total, 9.0 w/v% in total, 8.0 w/v% in total, 7.5 w/v% in total, 6.0 w/v% in total, or 5.5 w/v% in total. The preferred content is in a range of 1.0 to 10.0 w/v% in total. A more preferred content is 2.0 to 10.0 w/v% in total. A further preferred content is 2.5 to 7.5 w/v% in total. A still further preferred content is 4.0 to 6.0 w/v% in total, and a particularly preferred content is 4.5 to 5.5 w/v% in total. Besides, a content of 1.5 to 6.0 w/v% in total, 2.0 to 6.0 w/v% in total, or 2.5 to 6.0 w/v% in total is also preferred.

### <Other Ingredients>

When other ingredients are blended in the cell cryopreservation solution of the present invention as long as the effects of the present invention are not impaired, the effects of the present invention can be enhanced, or other effects can be provided. Examples of such an ingredient include a cell cryoprotectant different from the above-described ingredients, an antioxidant, a pH adjuster, an excipient, a binder, a perfume, a buffer, a thickener, a colorant, a stabilizer, a moisturizer, and a preservative. In particular, an antioxidant is preferably blended in the cell cryopreservation solution of the present invention. In the cell cryopreservation solution of the present invention, these other ingredients may be blended alone or in combination of two or more.

Among these, the antioxidant is preferably blended in the cell cryopreservation solution of the present invention because the cell preservation effect is further improved when it is blended in the cell cryopreservation solution of the present invention. In particular, when the antioxidant is blended in the cell cryopreservation solution of the present invention, the cell preservation effect on pluripotent stem cells, particularly mesenchymal stem cells such as mesenchymal stem cells derived from the bone marrow, is further improved, and hence the antioxidant is preferably blended in the cell cryopreservation solution of the present invention. Examples of the antioxidant include glutathione, sodium α-tocopheryl phosphate (TPNa: TPNa being a registered trademark of Showa Denko K.K.), ascorbic acid, and derivatives thereof. Specific examples of an ascorbic acid derivative include L-ascorbic acid 2-glucoside, L-ascorbic acid 2-phosphate sesquimagnesium salt hydrate, and L-ascorbic acid 2-phosphate trisodium salt. Among these, ascorbic acid or an ascorbic acid derivative are preferred, and L-ascorbic acid 2-glucoside is further preferred.

It is noted that dimethyl sulfoxide (DMSO) is not an essential ingredient in the cell cryopreservation solution of the present invention. It is pointed out that dimethyl sulfoxide (DMSO) is used for inducing differentiation of cultured cells, or that there is a possibility of changing differentiation phenotype of cells when DMSO is used for cryopreservation. Therefore, the cell cryopreservation solution of the present invention is preferably free of dimethyl sulfoxide (DMSO).

### <Base Solution>

The cell cryopreservation solution of the present invention is obtained by dispersing the above-described ingredients in a base solution. As the base solution, for example, a water solution or an alcohol solution can be used, and an aqueous solution can be preferably used. As the aqueous solution, for example, an isotonic solution, various buffers (including an isotonic solution having a buffering effect), or various basal media for various cells or tissues can be used. Examples of the isotonic solution include saline, Ringer's solution, and Hank's solution. Examples of the buffers include Good's buffer, a phosphate buffer, an imidazole buffer, and triethanolamine hydrochloride buffer (TEA), and further include saline having a buffering effect such as phosphate buffered saline (PBS), Tris-buffered saline (TBS), or HEPES-buffered saline. Examples of the basal medium include DMEM, EMEM, RPMI-1640, α-MEM, F-12, F-10, and M-199.

As the base solution used in the present invention, a buffer or a basal medium is suitably used. Here, the basal medium refers to a medium that has identified composition, is free of a biological macromolecule (such as a serum, or a protein component such as a growth factor, albumin, or an extracellular matrix) of unknown origin, and consists of an amino acid, a vitamin, an inorganic salt, a carbon source such as glucose and the like. When such a base solution is used, a cell cryopreservation solution that is excellent in cell preservation effect and forms less bubbles can be obtained more surely. In particular, phosphate buffered saline (PBS) is particularly preferably used.

### <pH>

The cell cryopreservation solution of the present invention usually has a pH of 6.0 to 8.0, and preferably a pH of 7.0 to 7.5. This pH can be adjusted by using the above-described pH adjuster.

### [Cell Cryopreservation Method]

In using the cell cryopreservation solution of the present invention, cells to be preserved can be cryopreserved by employing various cryopreservation methods. The cryopreservation method where the cell cryopreservation solution of the present invention can be used is not especially limited, and cells to be preserved can be cryopreserved by employing various cryopreservation methods, and in particular, a slow freezing method can be suitably employed. A cell cryopreservation method employing the slow freezing method can be performed, for example, by suspending cells to be preserved in the cell cryopreservation solution of the present invention, then cooling the resultant slowly to freeze the cells, and appropriately preserving the thus frozen cells (in, for example, an ultracold freezer, or liquid nitrogen).

Therefore, the present invention also relates to a slow freezing method for cells wherein the cell cryopreservation solution of the present invention is used.

Specifically, the slow freezing method for cells of the present invention is a slow freezing method for cells comprising, for example, a step of suspending cells to be preserved in the cell cryopreservation solution of the present invention; and a step of freezing the cells by slowly cooling the cell cryopreservation solution in which the cells are suspended.

The slow freezing method for cells of the present invention is excellent in handleability because the cell cryopreservation solution of the present invention is used, and hence there is no need to care about bubbling in suspending the cells in the cell cryopreservation solution. Besides, since it is a slow freezing method, there is no need to prepare liquid nitrogen or a special tool necessary, for example, in a vitrification method, and hence it can be easily performed. Furthermore, the cell cryopreservation method of the present invention can preserve cells at high preservation efficiency.

### <Cells to be Preserved>

Cells to be preserved are not especially limited, and any cells generally cryopreserved can be preserved with the cell cryopreservation solution of the present invention. For example, cells in any forms, such as cells established as cultured cell lines, normal cells obtained from biological tissues and not established, and transformed cells obtained by genetic engineering technique, can be preserved, and in addition, pluripotent stem cells such as induced pluripotent stem cells (iPS cells), and embryonic stem cells (ES cells), and various stem cells such as mesenchymal stem cells, hematopoietic stem cells, neural stem cells, bone marrow stem cells, and germline stem cells can be preserved. The cell cryopreservation solution of the present invention can preserve not only these cells but also, for example, various tissues and organs.

The origin of the cells is not especially limited, and the origin may be microorganisms, bacteria, animal cells and plant cells, and preferably animal cells. Examples of the animal cells include cells of vertebrates including mammals such as mice, rats, guinea pigs, hamsters, rabbits, cats, dogs, sheep, pigs, cattle, horses, goats, monkeys and humans, birds such as domestic fowl and ostriches, reptiles such as crocodiles, amphibians such as frogs, and fish such as zebra fish and medaka fish, and other examples include cells of non-vertebrates including insects such as silkworms, moths, and drosophilas.

Among these, the cell cryopreservation solution of the present invention is suitably used for mesenchymal cells and mesenchymal stem cells. Examples of the mesenchymal cells and mesenchymal stem cells include osteocytes, chondrocytes, bone marrow cells, muscle cells, cardiac myocytes, tendon cells, adipocytes, dermal papilla cells, pulp cells, and stem cells thereof. In particular, the cell cryopreservation solution of the present invention can be suitably used for bone marrow-derived mesenchymal stem cells, and adipose tissue-derived stem cells.

### EXAMPLES

The present invention will hereinafter be described in more detail with reference to Examples, and it is noted that the present invention is not limited to these.

### [Example 1] Cell Preservation Effect Test

### 1. Materials

### <Cell Cryopreservation Solution>

The following ingredients and base solutions were used to prepare cell cryopreservation solutions having various compositions. Each of the cell cryopreservation solutions was filter sterilized through a 0.22 µm filter (Nalgene (manufactured by Thermo Scientific)) before use in a test.

### (Respective Ingredients)

As respective ingredients of the cell cryopreservation solutions, the following were used:
- propylene glycol: manufactured by Nacalai Tesque, Inc.
- trehalose: manufactured by Hayashibara Co., Ltd.
- sucrose: manufactured by Nacalai Tesque, Inc.
- lactose: manufactured by Nacalai Tesque, Inc.
- maltotriose: manufactured by Hayashibara Co., Ltd.
- Ficoll: manufactured by Nacalai Tesque, Inc.
- polyethylene glycol (PEG) #200, PEG #600, PEG #2000, PEG #6000, PEG #20000: manufactured by Nacalai Tesque, Inc.
- hydroxyethyl starch (HES): manufactured by SIGMA
- pullulan: manufactured by Hayashibara Co., Ltd.
- human serum albumin (HSA): manufactured by Nacalai Tesque, Inc.
- L-ascorbic acid 2-glucoside: manufactured by Hayashibara Co., Ltd.

### (Base Solutions)

As the base solutions, the following were used:
- DMEM: manufactured by Nacalai Tesque, Inc.
- phosphate buffered saline (PBS): manufactured by Nacalai Tesque, Inc.

It is noted that cell cryopreservation solutions were prepared to have final concentrations of phosphate buffered saline (PBS) of 1x, 0.5x, and 0.2x.

### <Cells>

The following cells were used for experiments.
- normal human dermal fibroblasts (obtained from Kurabo Industries Ltd.)
- NIH3T3 cells (mouse fibroblasts) (obtained from ECACC)
- human bone marrow-derived mesenchymal stem cells (obtained from Lonza)

### 2. Method

The cell preservation effect was evaluated by cryopreserving cells to be preserved with each cell cryopreservation solution and measuring a survival rate of the thawed cells. Specifically, cells to be preserved were suspended in each cell cryopreservation solution in a cell concentration of 1.0 x 10⁶ cells/ml, the resultant was dispensed into freezing tubes by 1 ml each, and the resultant cells were slowly frozen at -80°C. The thus frozen cells were preserved at -80°C for a prescribed period of time, and then thawed at 37°C. The thus thawed cells were seeded at a prescribed density and cultured in a cell culture medium overnight. Then, the number of living cells therein was measured with alamarBlue (registered trademark) Cell Viability Reagent (manufactured by Invitrogen (Thermo Scientific)) in accordance with the attached protocol. In this measurement method, a survival rate is indicated by fluorescence intensity proportional to the number of living cells.

### 3. Results

### (1) Test 1

Cell cryopreservation solutions respectively having the following compositions were tested. In the following compositions, the unit "%" means "v/v%" for propylene glycol, and "w/v%" for the other ingredients (which also applies to tests of Examples 1 and 2).

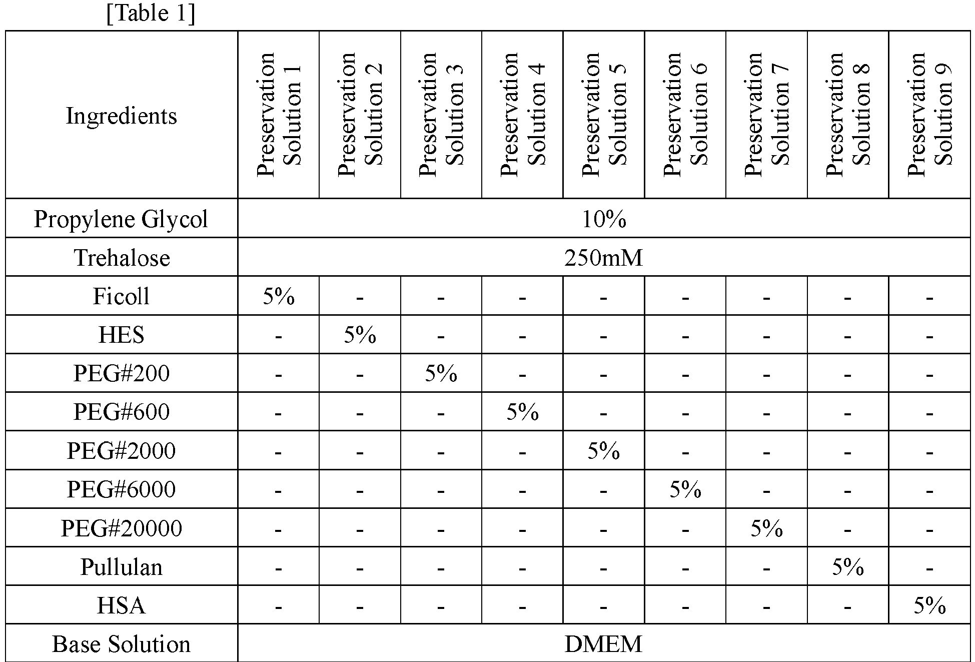

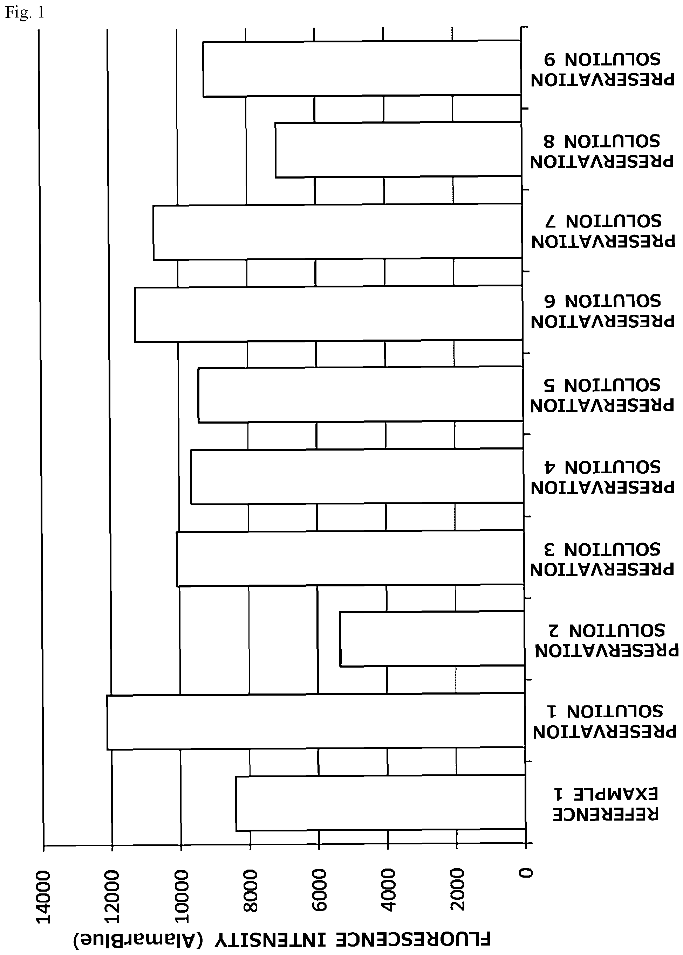

In Test 1, normal human dermal fibroblasts were used as cells to be preserved, and a survival rate of the cells obtained after preservation for 3 weeks with each cell cryopreservation solution was measured (n = 2). Here, the thawed cells were seeded at a cell density of 1.0 x 10⁵ cells/well (24-well plate), and the number of living cells therein was measured with alamarBlue (registered trademark) Cell Viability Reagent. Besides, as a reference example, a commercially available cell cryopreservation solution, STEM-CELLBANKER (registered trademark) DMSO Free GMP grade (manufactured by Nippon Zenyaku Kogyo Co., Ltd., Reference Example 1) was also tested. The results are illustrated in Fig. 1.

As illustrated in Fig. 1, the cell cryopreservation solution containing 5% Ficoll or 5% polyethylene glycol (PEG #200, PEG #600, PEG #2000, PEG #6000, or PEG #20000) in addition to 10% propylene glycol and 250 mM trehalose exhibited a high survival rate as compared with the cell cryopreservation solution containing 5% hydroxyethyl starch, 5% pullulan, or 5% human serum albumin instead of 5% Ficoll or 5% polyethylene glycol, and also exhibited a high survival rate as compared with the commercially available cell cryopreservation solution.

### (2) Test 2

Cell cryopreservation solutions having the following compositions were tested.

**[Table 2]**

| Ingredients | Preservation Solution 10 | Preservation Solution 11 |
|---|---|---|
| Propylene Glycol | 10% | |
| Trehalose | 250mM | - |
| Sucrose | - | 250mM |
| Ficoll | 5% | |
| Base Solution | 0.5×PBS | |

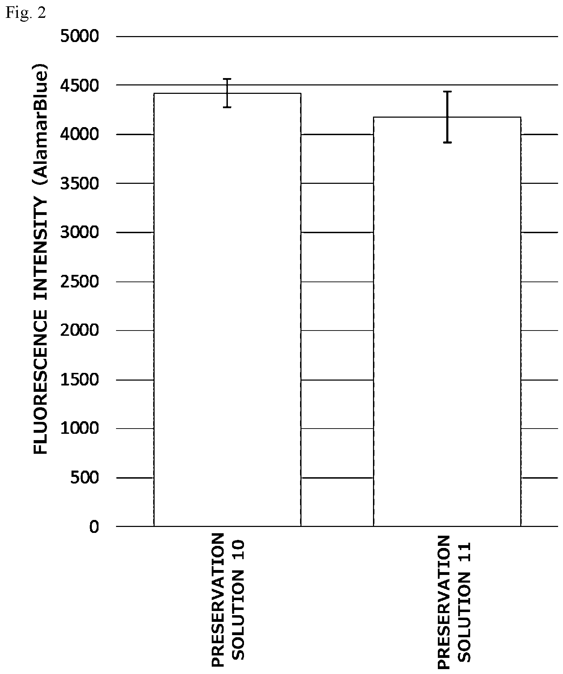

In Test 2, normal human dermal fibroblasts were used as cells to be preserved, and a survival rate of the cells obtained after preservation for 10 days with each cell cryopreservation solution was measured (n = 4). Here, the thawed cells were seeded at a cell density of 1.0 x 10⁵ cells/well (24-well plate), and the number of living cells therein was measured with alamarBlue (registered trademark) Cell Viability Reagent. The results are illustrated in Fig. 2.

As illustrated in Fig. 2, the cell cryopreservation solution containing 250 mM sucrose instead of 250 mM trehalose exhibited a high survival rate in the same manner as the cell cryopreservation solution containing 10% propylene glycol, 250 mM trehalose, and 5% Ficoll.

### (3) Test 3

Cell cryopreservation solutions having the following compositions were tested.

**[Table 3]**

| Ingredients | Preservation Solution 12 | Preservation Solution 13 | Preservation Solution 14 | Preservation Solution 15 |
|---|---|---|---|---|
| Propylene Glycol | 10% | | | |
| Trehalose | 100mM | 200mM | 250mM | 300mM |
| Ficoll | 5% | | | |
| Base Solution | 0.5×PBS | | | |

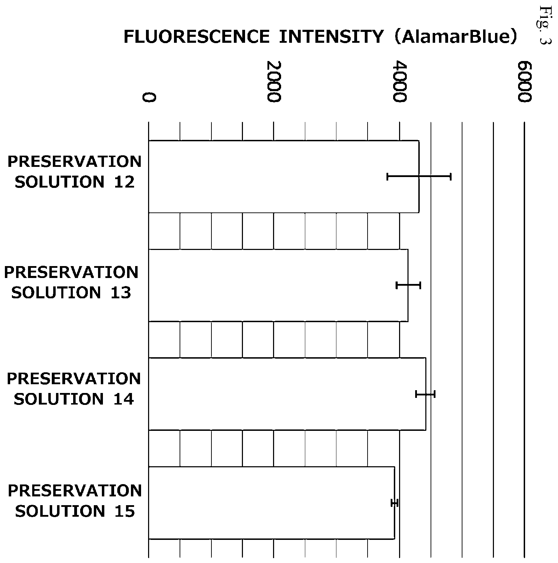

In Test 3, normal human dermal fibroblasts were used as cells to be preserved, and a survival rate of the cells obtained after preservation for 2 weeks with each cell cryopreservation solution was measured (n = 4). Here, the thawed cells were seeded at a cell density of 1.0 x 10⁵ cells/well (24-well plate), and the number of living cells therein was measured with alamarBlue (registered trademark) Cell Viability Reagent. The results are illustrated in Fig. 3.

As illustrated in Fig. 3, the cell cryopreservation solution containing trehalose in a concentration of 100 mM, 200 mM or 300 mM also exhibited a high survival rate in the same manner as the cell cryopreservation solution containing 10% propylene glycol, 250 mM trehalose, and 5% Ficoll.

### (4) Test 4

Cell cryopreservation solutions having the following compositions were tested.

**[Table 4]**

| Ingredients | Preservation Solution 16 | Preservation Solution 17 | Preservation Solution 18 |
|---|---|---|---|
| Propylene Glycol | 10% | | |
| Trehalose | 250mM | | |
| Ficoll | 5% | | |
| Base Solution | 1×PBS | 0.5×PBS | 0.2×PBS |

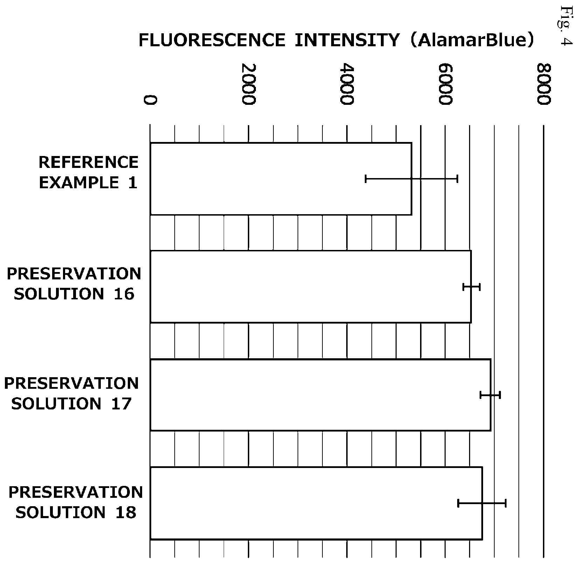

In Test 4, NIH3T3 cells (mouse fibroblasts) were used as cells to be preserved, and a survival rate of the cells obtained after preservation for 2 weeks with each cell cryopreservation solution was measured (n = 4). Here, the thawed cells were seeded at a cell density of 1.0 x 10⁵ cells/well (24-well plate), and the number of living cells therein was measured with alamarBlue (registered trademark) Cell Viability Reagent. Besides, in Test 4, as a reference example, a commercially available cell cryopreservation solution, STEM-CELLBANKER (registered trademark) DMSO Free GMP grade (manufactured by Nippon Zenyaku Kogyo Co., Ltd., Reference Example 1) was also tested. The results are illustrated in Fig. 4.

As illustrated in Fig. 4, the cell cryopreservation solution containing 10% propylene glycol, 250 mM trehalose, and 5% Ficoll exhibited a high survival rate on NIH3T3 cells (mouse fibroblasts) as compared with the commercially available cell cryopreservation solution also when PBS (in a concentration of 1x, 0.5x or 0.2x) was used as the base solution.

### (5) Test 5

Cell cryopreservation solutions having the following compositions were tested.

**[Table 5]**

| Ingredients | Preservation Solution 19 | Preservation Solution 20 |
|---|---|---|
| Propylene Glycol | 10% | |
| Trehalose | 250mM | |
| Ficoll | 5% | |
| L-ascorbic Acid 2-Glucoside | - | 5mM |
| Base Solution | 1×PBS | |

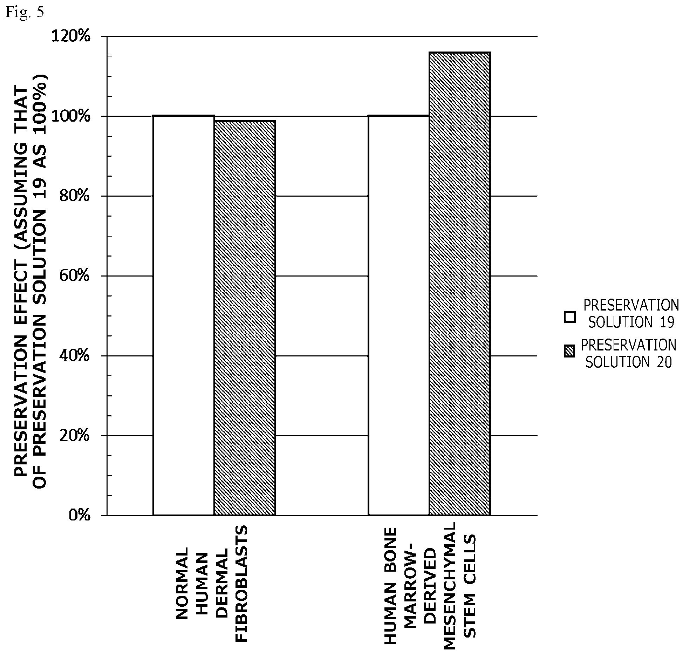

In Test 5, normal human dermal fibroblasts or human bone marrow-derived mesenchymal stem cells were used as cells to be preserved, and a survival rate of the cells obtained after preservation for 2 weeks with each cell cryopreservation solution was measured (n = 1). Here, the thawed cells were seeded at a cell density of 1.0 x 10⁵ cells/well (24-well plate), and the number of living cells therein was measured with alamarBlue (registered trademark) Cell Viability Reagent. The results are illustrated in Fig. 5. In Fig. 5, the preservation effect for the respective cells is indicated as a relative value obtained by assuming that a measured value (fluorescence intensity) of a preservation solution 19 is 100%.

As illustrated in Fig. 5, the cell cryopreservation solution containing 5 mM L-ascorbic acid 2-glucoside in addition to 10% propylene glycol, 250 mM trehalose, and 5% Ficoll exhibited a high survival rate on the human bone marrow-derived mesenchymal stem cells as compared with the cell cryopreservation solution free of 5 mM L-ascorbic acid 2-glucoside.

### [Example 2] Bubble Breaking Test of Cell Cryopreservation Solution

### 1. Materials

### <Cell Cryopreservation Solutions>

Cell cryopreservation solutions having various compositions were prepared in the same manner as in Example 1.

### 2. Method

Bubble breaking of each cell cryopreservation solution was evaluated by forcedly bubbling the cell cryopreservation solution, and measuring time until the bubbles disappeared. Specifically, each cell cryopreservation solution containing NIH-3T3 cells (1.0 x 10⁶ cells/ml) suspended therein was first prepared in a 2 mL centrifuge tube (manufactured by Eppendorf). Subsequently, a micropipette (20 - 200) loaded with 200 µL chips was used to form 200 µL of bubbles within each cell cryopreservation solution. The resultant centrifuge tube was allowed to stand still at room temperature, and it was checked over time whether or not the bubbles remained in the cell cryopreservation solution held in the centrifuge tube.

### 3. Results

Cell cryopreservation solutions having the following compositions were tested.

**[Table 6]**

| Ingredients | Preservation Solution 21 | Preservation Solution 22 | Preservation Solution 23 |
|---|---|---|---|
| Propylene Glycol | 10% | | |
| Trehalose | 250mM | | |
| Ficoll | 5% | | - |
| PEG#20000 | - | - | 5% |
| L-ascorbic Acid 2-Glucoside | - | 5mM | 5mM |
| Base Solution | 0.5×PBS | | |

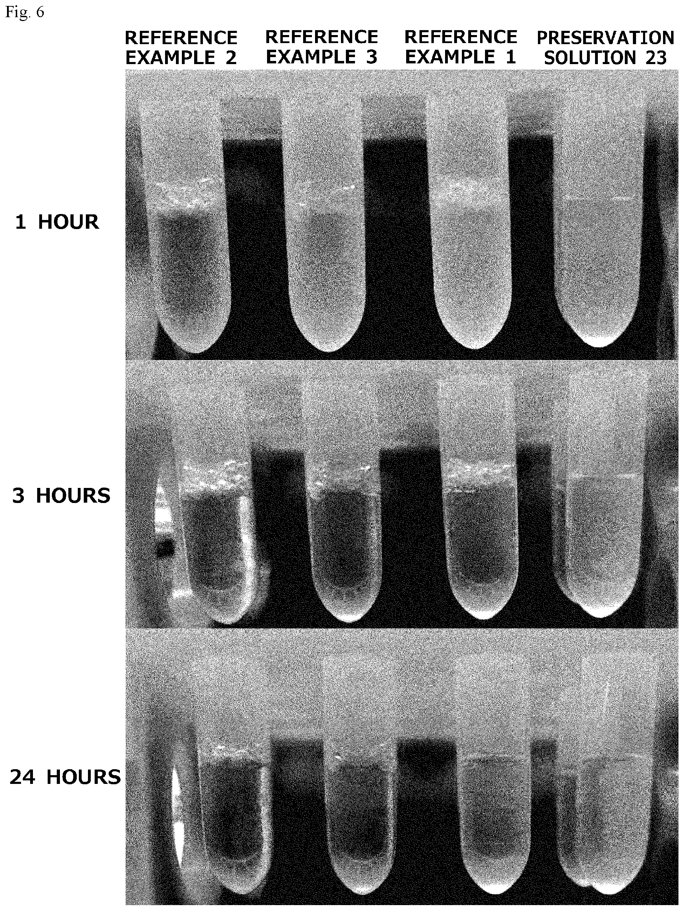

Besides, as Reference Examples, commercially available cell cryopreservation solutions, STEM-CELLBANKER (registered trademark) DMSO Free GMP grade (manufactured by Nippon Zenyaku Kogyo Co., Ltd., Reference Example 1), CELLBANKER (registered trademark) 1 (manufactured by Nippon Zenyaku Kogyo Co., Ltd., Reference Example 2), and CELLBANKER (registered trademark) 1 plus (manufactured by Nippon Zenyaku Kogyo Co., Ltd., Reference Example 3) were also tested. The results are shown in Table 7 and Fig. 6. Table 7 shows, with respect to each cell cryopreservation solution, the number of centrifuge tubes in which bubbles remained at each time in the bubble breaking test using four centrifuge tubes by the above-described method. Fig. 6 illustrates representative photographs of bubble-remaining states in each cell cryopreservation solution at times of 1 hour, 3 hours, and 24 hours after the operation of forming bubbles. This bubble breaking test was performed repeatedly 20 times, and similar results were obtained in all the cases.

**[Table 7]**

| | Start | 10 sec. | 10 min. | 30 min. | 60 min. | 90 min. | 120 min. | 180 min. | 24 hrs. |
|---|---|---|---|---|---|---|---|---|---|
| Preservation Solution 22 | 4 | 0 | 0 | 0 | 0 | 0 | 0 | 0 | 0 |
| Preservation Solution 23 | 4 | 0 | 0 | 0 | 0 | 0 | 0 | 0 | 0 |
| Reference Example 1 | 4 | 4 | 4 | 4 | 4 | 4 | 4 | 4 | 0 |
| Reference Example 2 | 4 | 4 | 4 | 4 | 4 | 4 | 4 | 4 | 4 |
| Reference Example 3 | 4 | 4 | 4 | 4 | 4 | 4 | 4 | 4 | 4 |

As shown in Table 7 and Fig. 6, it was found that the cell cryopreservation solution containing 10% propylene glycol, 250 mM trehalose, 5% Ficoll or PEG #20000, and 5 mM L-ascorbic acid 2-glucoside is very good in bubble breaking as compared with the commercially available cell cryopreservation solutions. Besides, also for preservation solution 21 free of 5 mM L-ascorbic acid 2-glucoside, all bubbles formed in the centrifuge tubes disappeared within 10 seconds after the operation of forming bubbles (n = 20).

Furthermore, preservation solutions obtained respectively by using sucrose, lactose or maltotriose instead of trehalose in preservation solution 22 were also tested, and for all the preservation solutions, all bubbles formed in centrifuge tubes disappeared within about 10 seconds after the operation of forming bubbles. In addition, a preservation solution obtained by using human serum albumin instead of Ficoll in the preservation solution 22 was also tested, and bubbles remained in the centrifuge tubes even 24 hours after the operation of forming bubbles.

### [Example 3] Cell Preservation Effect Test 2

### 1. Materials

### <Cell Cryopreservation Solutions>

The following ingredients and base solutions were used to prepare cell cryopreservation solutions having various compositions. Each of the cell cryopreservation solutions was filter sterilized through a 0.22 µm filter (Nalgene (manufactured by Thermo Scientific)) before use in a test.

### (Respective Ingredients)

As respective ingredients of the cell cryopreservation solutions, the following were used:
- propylene glycol: manufactured by Nacalai Tesque, Inc.
- ethylene glycol: manufactured by Nacalai Tesque, Inc.
- trehalose: manufactured by Hayashibara Co., Ltd.
- sucrose: manufactured by Nacalai Tesque, Inc.
- maltotriose: manufactured by Hayashibara Co., Ltd.
- polyethylene glycol (PEG) #20000: manufactured by Nacalai Tesque, Inc.
- L-ascorbic acid 2-glucoside: manufactured by Hayashibara Co., Ltd.

As the base solution, phosphate buffered saline (PBS) (manufactured by Nacalai Tesque, Inc.) adjusted to have a final concentration of 0.5x was used in all the cell cryopreservation solutions.

### <Cells>

The following cells were used for experiments.
- normal human dermal fibroblasts (obtained from Kurabo Industries Ltd.)
- human adipose tissue-derived stem cells (obtained from PromoCell)
- human bone marrow-derived mesenchymal stem cells 1 (obtained from Lonza)
- human bone marrow-derived mesenchymal stem cells 2 (obtained from PromoCell)

### 2. Method

The cell preservation effect was evaluated by cryopreserving cells to be preserved with each cell cryopreservation solution and measuring a survival rate of the thawed cells. Specifically, cells to be preserved were suspended in each cell cryopreservation solution in a cell concentration of 1.0 x 10⁶ cells/ml, the resultant was dispensed into freezing tubes by 0.2 ml each (Test 8) or 1 ml each (Tests 6 to 7, and 9 to 11), and the resultant cells were slowly frozen at -80°C. The thus frozen cells were preserved at -80°C for a prescribed period of time, and then thawed at 37°C. Then, the number of living cells therein was measured by alamarBlue assay or a trypan blue staining method. Here, the alamarBlue assay was performed in the same manner as in Example 1 after seeding the thawed cells at a prescribed density, and culturing the cells in a cell culture medium overnight. In the trypan blue staining method, the thawed cells were stained with trypan blue, the total number of cells and the number of living cells were measured on a hemocytometer, and a survival rate was calculated based on a ratio of the number of living cells to the total number of cells.

### 3. Results

### (1) Test 6

Cell cryopreservation solutions respectively having the following compositions were tested. In the following compositions, the unit "%" means "v/v%" for propylene glycol and ethylene glycol, and "w/v%" for the other ingredients (which also applies to tests of Example 3).

**[Table 8]**

| Ingredients | Preservation Solution 24 | Preservation Solution 25 | Preservation Solution 26 | Preservation Solution 27 |
|---|---|---|---|---|
| Propylene Glycol | - | 5% | 10% | 15% |
| Trehalose | 250mM | | | |
| PEG#20000 | 5% | | | |
| Base Solution | 0.5×PBS | | | |

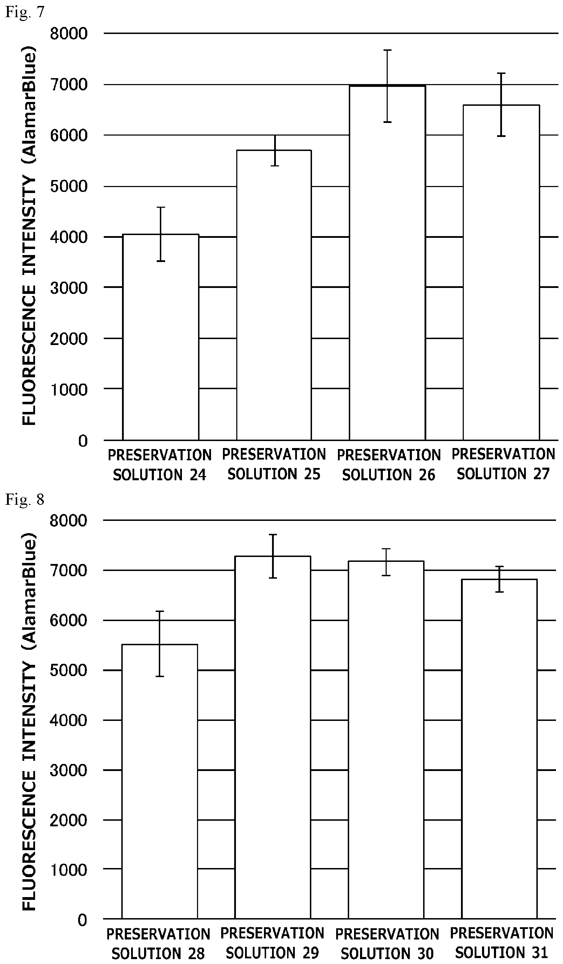

In Test 6, normal human dermal fibroblasts were used as cells to be preserved, and a survival rate of the cells obtained after preservation for 2 weeks with each cell cryopreservation solution was measured (n = 4). Here, the thawed cells were seeded at a cell density of 5.0 x 10⁴ cells/well (24-well plate), and the number of living cells therein was measured with alamarBlue (registered trademark) Cell Viability Reagent. The results are illustrated in Fig. 7.

As illustrated in Fig. 7, the cell cryopreservation solution containing propylene glycol, trehalose, and polyethylene glycol exhibited a high survival rate at any concentration of propylene glycol changed to 5%, 10% and 15%, and exhibited a particularly high survival rate at a concentration of 10%.

### (2) Test 7

Cell cryopreservation solutions having the following compositions were tested.

**[Table 9]**

| Ingredients | Preservation Solution 28 | Preservation Solution 29 | Preservation Solution 30 | Preservation Solution 31 |
|---|---|---|---|---|
| Propylene Glycol | 10% | | | |
| Trehalose | 250mM | | | |
| PEG#20000 | - | 2.5% | 5.0% | 7.5% |
| Base Solution | 0.5×PBS | | | |

In Test 7, normal human dermal fibroblasts were used as cells to be preserved, and a survival rate of the cells obtained after preservation for 2 weeks with each cell cryopreservation solution was measured (n = 4). Here, the thawed cells were seeded at a cell density of 5.0 x 10⁴ cells/well (24-well plate), and the number of living cells therein was measured with alamarBlue (registered trademark) Cell Viability Reagent. The results are illustrated in Fig. 8.

As illustrated in Fig. 8, the cell cryopreservation solution containing propylene glycol, trehalose, and polyethylene glycol exhibited a high survival rate at any concentration of polyethylene glycol changed to 2.5%, 5.0% and 7.5%.

### (3) Test 8

Cell cryopreservation solutions having the following compositions were tested.

**[Table 10]**

| Ingredients | Preservation Solution 32 | Preservation Solution 33 |
|---|---|---|
| Propylene Glycol | 10% | - |
| Ethylene Glycol | - | 10% |
| Trehalose | 250mM | |
| PEG#20000 | 5% | |
| Base Solution | 0.5×PBS | |

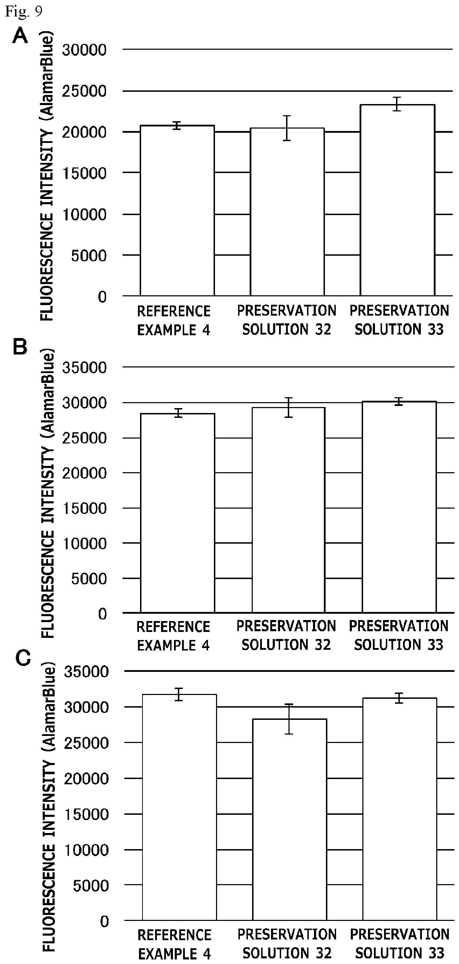

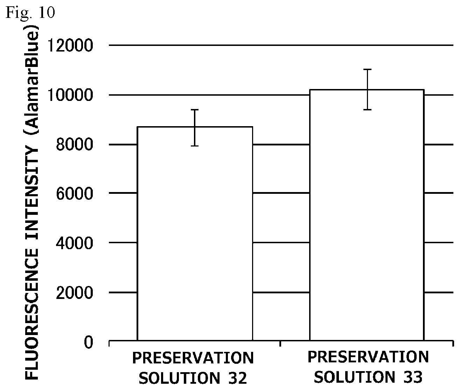

In Test 8, human bone marrow-derived mesenchymal stem cells 1 (obtained from Lonza), human bone marrow-derived mesenchymal stem cells 2 (obtained from PromoCell), human adipose tissue-derived stem cells, or normal human dermal fibroblasts were used as cells to be preserved, and a survival rate of the cells obtained after preservation for 1 to 5 days with each cell cryopreservation solution (for 2 days for the bone marrow-derived mesenchymal stem cells, overnight for the adipose tissue-derived stem cells, and for 5 days for the dermal fibroblasts) was measured (n = 4). Here, the thawed cells were seeded at a cell density of 5.0 x 10⁴ cells/well (24-well plate), and the number of living cells therein was measured with alamarBlue (registered trademark) Cell Viability Reagent. The results obtained when the human bone marrow-derived mesenchymal stem cells 1 (obtained from Lonza) were preserved are illustrated in Fig. 9A, the results obtained when the human bone marrow-derived mesenchymal stem cells 2 (obtained from PromoCell) were preserved are shown in Fig. 9B, and the results obtained when the human adipose tissue-derived stem cells were preserved are illustrated in Fig. 9C. Besides, the results obtained when the normal human dermal fibroblasts were preserved are illustrated in Fig. 10. In Test 8, as Reference Example, a commercially available cell cryopreservation solution, STEM-CELLBANKER (registered trademark) GMP grade (containing DMSO, manufactured by Nippon Zenyaku Kogyo Co., Ltd., Reference Example 4) was also tested (but not tested on normal human dermal fibroblasts).

As illustrated in Fig. 9, the cell cryopreservation solution containing 10% propylene glycol, 250 mM trehalose, and 5% polyethylene glycol exhibited, on all the stem cells, a high survival rate equivalent or higher than the commercially available cell cryopreservation solution. Besides, the cell cryopreservation solution containing ethylene glycol instead of propylene glycol exhibited a high survival rate equivalent to or higher than the cell cryopreservation solution containing propylene glycol, and besides, as illustrated in Fig. 10, exhibited, on the normal human dermal fibroblasts, a higher survival rate than the cell cryopreservation solution containing propylene glycol.

### (4) Test 9

A cell cryopreservation solution having the following composition was tested.

**[Table 11]**

| Ingredients | Preservation Solution 34 |
|---|---|
| Propylene Glycol | 10% |
| Trehalose | 250mM |
| PEG#20000 | 5% |
| L-ascorbic Acid 2-Glucoside | 5mM |
| Base Solution | 0.5×PBS |

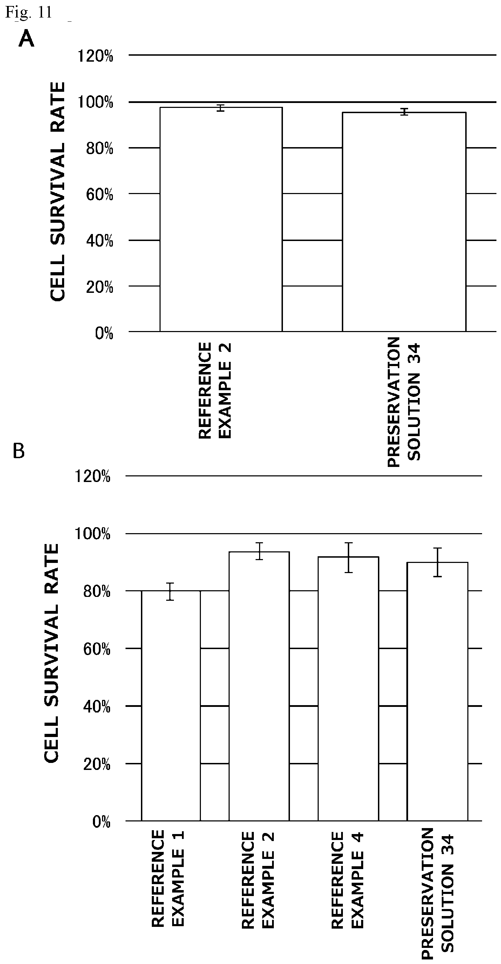

In Test 9, normal human dermal fibroblasts or bone marrow-derived mesenchymal stem cells 1 (obtained from Lonza) were used as cells to be preserved, and a survival rate of the cells obtained after preservation for 10 days with each cell cryopreservation solution was measured (n = 4). Here, in the thawed cells, the number of living cells was measured by the trypan blue staining method to calculate a survival rate. The result obtained when the normal human dermal fibroblasts were preserved is illustrated in Fig. 11A, and the result obtained when the human bone marrow-derived mesenchymal stem cells 1 were preserved is illustrated in Fig. 11B. In Test 9, as Reference Examples, commercially available cell cryopreservation solutions, STEM-CELLBANKER (registered trademark) DMSO Free GMP grade (manufactured by Nippon Zenyaku Kogyo Co., Ltd., Reference Example 1), CELLBANKER (registered trademark) 1 (manufactured by Nippon Zenyaku Kogyo Co., Ltd., Reference Example 2), and STEM-CELLBANKER (registered trademark) GMP grade (manufactured by Nippon Zenyaku Kogyo Co., Ltd., Reference Example 4), were also tested (only Reference Example 2 was tested for normal human dermal fibroblasts).

As illustrated in Fig. 11, the cell cryopreservation solution containing 10% propylene glycol, 250 mM trehalose, 5% polyethylene glycol, and 5 mM L-ascorbic acid 2-glucoside exhibited a high survival rate, on both the normal human dermal fibroblasts and the bone marrow-derived mesenchymal stem cells 1, equivalent to or higher than the commercially available cell cryopreservation solutions.

### (5) Test 10

Cell cryopreservation solutions having the following compositions were tested.

**[Table 12]**

| Ingredients | Preservation Solution 35 | Preservation Solution 36 |
|---|---|---|
| Propylene Glycol | 10% | |
| Sucrose | 250mM | - |
| Maltotriose | - | 250mM |
| PEG#20000 | 5% | |
| Base Solution | 0.5×PBS | |

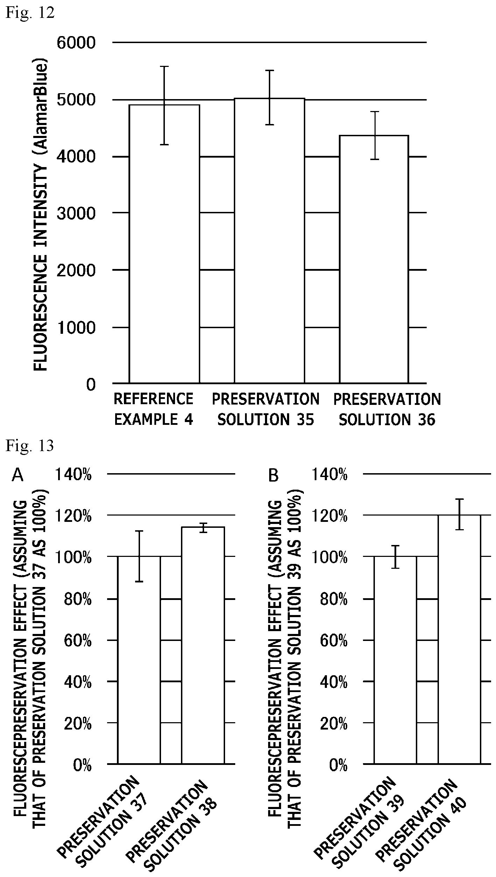

In Test 10, normal human dermal fibroblasts were used as cells to be preserved, and a survival rate of the cells obtained after preservation for 1 week with each cell cryopreservation solution was measured (n = 4). Here, the thawed cells were seeded at a cell density of 5.0 x 10⁴ cells/well (24-well plate), and the number of living cells therein was measured with alamarBlue (registered trademark) Cell Viability Reagent. The results are illustrated in Fig. 12. In Test 10, as Reference Example, a commercially available cell cryopreservation solution, STEM-CELLBANKER (registered trademark) GMP grade (containing DMSO, manufactured by Nippon Zenyaku Kogyo Co., Ltd., Reference Example 4) was also tested.

As illustrated in Fig. 12, the cell cryopreservation solution containing 10% propylene glycol, 250 mM sucrose, and 5% polyethylene glycol exhibited a high survival rate, on the normal human dermal fibroblasts, equivalent to or higher than the commercially available cell cryopreservation solution. Besides, the cell cryopreservation solution containing maltotriose instead of sucrose similarly exhibited a high survival rate.

### (6) Test 11

Cell cryopreservation solutions having the following compositions were tested.

**[Table 13]**

| Ingredients | Preservation Solution 37 | Preservation Solution 38 | Preservation Solution 39 | Preservation Solution 40 |
|---|---|---|---|---|
| Propylene Glycol | 10% | | - | - |
| Ethylene Glycol | - | - | 10% | |
| Trehalose | 250mM | | | |
| PEG#20000 | 5% | | | |
| L-ascorbic Acid 2-Glucoside | - | 5mM | - | 5mM |
| Base Solution | 0.5×PBS | | | |

In Test 11, normal human dermal fibroblasts were used as cells to be preserved, and a survival rate of the cells obtained after preservation for 1 week with each cell cryopreservation solution was measured (n = 3). Here, the thawed cells were seeded at a cell density of 5.0 x 10⁴ cells/well (24-well plate), and the number of living cells therein was measured with alamarBlue (registered trademark) Cell Viability Reagent. The results are illustrated in Figs. 13A and 13B. In Figs. 13A and 13B, the preservation effect of each cell cryopreservation solution for the cells is indicated as a relative value obtained by assuming that a measured value (fluorescence intensity) of the cell cryopreservation solution free of L-ascorbic acid 2-glucoside (preservation solution 37 or 39) is 100%.

As illustrated in Figs. 13A and 13B, the cell cryopreservation solution containing 5 mM L-ascorbic acid 2-glucoside in addition to 10% propylene glycol, 250 mM trehalose and 5% polyethylene glycol exhibited a high survival rate as compared with the cell cryopreservation solution free of 5 mM L-ascorbic acid 2-glucoside. Besides, the cell cryopreservation solution containing ethylene glycol instead of propylene glycol exhibited a higher survival rate when 5 mM L-ascorbic acid 2-glucoside was contained than when 5 mM L-ascorbic acid 2-glucoside was not contained.

### (7) Bubble Breaking Test

A bubble breaking test was performed on preservation solutions 25 to 27 and 29 to 40 in the same manner as in Example 2 except that cells were not suspended in each preservation solution, and in all the preservation solutions, all bubbles formed in centrifuge tubes disappeared within 10 seconds after the operation of forming bubbles.

### INDUSTRIAL APPLICABILITY

According to the present invention, a cell cryopreservation solution that is excellent in cell preservation effect and forms less bubbles can be provided. Such a cell cryopreservation solution can be usefully used as a preservative for stem cells, differentiated cells and the like for medical use (including a cell preparation and the like), or a reagent for basic research.

## Claims

1. A cell cryopreservation solution, comprising: a cell membrane permeable polyhydric alcohol (a) in a concentration of 1.0 to 25.0 v/v%, a saccharide (b) in a concentration of 100 to 1000 mM, and at least one (c) selected from the group consisting of Ficoll and polyethylene glycol in a total concentration of 0.5 to 10.0 w/v%.

2. The cell cryopreservation solution according to claim 1, wherein a base solution is a buffer or a basal medium.

3. The cell cryopreservation solution according to claim 1 or 2, wherein the cell membrane permeable polyhydric alcohol (a) is at least one selected from the group consisting of ethylene glycol and propylene glycol.

4. The cell cryopreservation solution according to claim 3, containing ethylene glycol alone as the cell membrane permeable polyhydric alcohol (a).

5. The cell cryopreservation solution according to any one of claims 1 to 4, wherein the saccharide (b) is an oligosaccharide.

6. The cell cryopreservation solution according to claim 4, wherein the saccharide (b) is at least one selected from the group consisting of trehalose, sucrose, lactose, and maltotriose.

7. The cell cryopreservation solution according to any one of claims 1 to 6, further comprising L-ascorbic acid 2-glucoside.

8. A slow freezing method for cells, comprising using the cell cryopreservation solution according to any one of claims 1 to 7.
